# EUROPÄISCHE PATENTSCHRIFT

(11) **EP 0 989 039 B1**
(45) Veröffentlichungstag und Bekanntmachung des Hinweises auf die Patenterteilung: **01.03.2006**
(21) Anmeldenummer: 99108308.0
(22) Anmeldetag: 28.04.1999
(51) Int. Cl.: B60T 13/66, B60T 13/68, B60T 7/12, B60T 13/22

(54) **Bremseinrichtung für eine Arbeitsmaschine**
Brake device for a mobile machine
Dispositif de freinage pour une machine de travail

(30) Priorität: 26.08.1998 DE 19838773
(43) Veröffentlichungstag der Anmeldung: 29.03.2000
(73) Patentinhaber: CNH Baumaschinen GmbH, 13581 Berlin (DE)
(72) Erfinder: Alpers, Günther, 44359 Dortmund (DE); Winter, Heinrich, 44287 Dortmund (DE)
(74) Vertreter: Meinke, Dabringhaus und Partner GbR

(56) Entgegenhaltungen:
- DE-A- 4 441 003
- DE-A- 19 650 514

## Beschreibung

Die Erfindung betrifft eine Bremseinrichtung für eine Arbeitsmaschine, insbesondere für einen Mobilbagger mit Radantrieb, mit wenigstens einer direkt oder indirekt auf ein Rad wirkenden Betriebsbremse, einer Parkbremse und einer Blokkiereinrichtung für eine Pendelachse der Arbeitsmaschine, wobei die wenigstens eine Betriebsbremse, die Parkbremse und die Blockiereinrichtung mit einer Steuereinheit verbunden und durch diese betätigbar sind.

Arbeitsmaschinen, die im Stand ihre Arbeitsfunktionen verrichten, z.B. Mobilbagger, müssen im Stillstand spielfrei festgesetzt werden, um ein sicheres Arbeiten zu gewährleisten.

Bekannt sind Bremseinrichtungen, bei denen der Fahrer im Stillstand die Parkbremse einlegen muß, die auf das Getriebe oder eine Achse wirkt. Darüber hinaus muß er die Betriebsbremse, die auf alle Räder der Maschine wirkt, mittels Betriebsbremspedal festsetzen. Das Bremspedal wird dazu in getretener Position eingerastet. Wenn Arbeitsmaschinen für den Fahrbetrieb mit einer Pendelachse versehen sind, muß diese mit einem weiteren Schaltventil durch Hydraulikzylinder blockiert werden. Um diesen Vorgang zu vereinfachen, sind bereits Schaltungen bekannt, bei denen die Blockierung der Pendelachse mit dem Einlegen der Handbremse verbunden wird.

Eine Bremseinrichtung mit den Merkmalen des Oberbegriffes des Patentanspruches 1 ist aus DE-A-44 41 003 bekannt. Diese Bremseinrichtung unterscheidet sich gegenüber dem vorerwähnten Stand der Technik dadurch, daß anstelle der drei Schaltfunktionen mit drei verschiedenen Schaltern die Schaltfunktionen in einen Schalter (also in eine Art Steuereinheit) mit vier verschiedenen Stellungen zusammengefaßt sind, wobei durch eine feste Verdrahtung vier verschiedene Kombinationen möglicher Betätigungen oder Nichtbetätigungen der einzelnen Brems- und Blockiereinrichtungen vorgesehen sind. Darüber hinaus sind keine weiteren Mittel offenbart, der Fahrer muß auch bei dieser Bremseinrichtung in der gewünschten Situation (Stillstand der Arbeitsmaschine) entscheiden, welche der vier Schaltstellungen er wählen will, um die Arbeitsmaschine festzusetzen. Der Schalter ist dann vom Fahrer manuell zu betätigen und die Arbeitsmaschine wird nur als Folge der manuellen Betätigung und Auswahl durch den Fahrer blokkiert. Will der Fahrer weiterfahren, muß er den Schalter erneut betätigen und in die Position für das Fahren bringen. Der einzige Vorteil dieser Lösung gegenüber dem vorzitierten Stand der Technik liegt darin, daß der Fahrer einen Schalter mit vier Stellungen anstelle von drei Einzelschaltern betätigt. Diese Schaltung ist jedoch völlig unabhängig vom Betriebszustand der Arbeitsmaschine und kann, wie beim vorerwähnten Stand der Technik, bei Fehlbedienungen des Fahrers zu unerwünschten Reaktionen führen.

Aufgabe der Erfindung ist es, eine Bremseinrichtung so zu verbessern, daß das Betätigen der Bremsen und Blockiereinrichtung im Stillstand unabhängig von etwaigen Bedienungsfehlern auf möglichst einfache Weise zuverlässig erfolgt.

Diese Aufgabe wird mit einer Bremseinrichtung der eingangs bezeichneten Art erfindungsgemäß dadurch gelöst, daß die automatische Steuereinheit mit Eingängen für die Erfassung von Betriebszuständen der Arbeitsmaschine und mit Eingängen zur Erfassung von Fahrabsichten des Fahrers (Vorwärtsfahrt, Rückwärtsfahrt, Fahrpedalstellung) sowie mit Ausgängen zur gleichzeitigen Betätigung der wenigstens einen Betriebsbremse, der Parkbremse und der Blockiereinrichtung der Pendelachse versehen ist, und daß die automatische Steuereinheit so eingerichtet ist, daß die gleichzeitige Betätigung automatisch, unabhängig vom Fahrer durch die Steuereinheit erfolgt, wenn durch die Steuereinheit festgestellt wird, daß die durch die Eingänge erfaßten und von der Steuereinheit ausgewerteten Betriebszustände der Arbeitsmaschine und Fahrabsichten des Fahrers vorgebbare Bedingungen erfüllen.

Durch die Ausrüstung der Bremseinrichtung mit einer derartigen automatischen Steuereinheit und Sensoren oder dgl. zur Erfassung der Betriebszustände der Arbeitsmaschine sowie der Fahrabsichten des Fahrers können bei Stillstand des Fahrzeuges je nach vorgegebenen Bedingungen von der Steuereinheit automatisch alle Bremsen bzw. Blockiereinrichtungen betätigt werden. Der Fahrer braucht sich dann nicht mehr auf die Betätigung sämtlicher Bremsen und Blockiereinrichtungen zu konzentrieren, die Aktivierung derselben erfolgt ohne die Gefahr von Bedienungsfehlern automatisch.

Vorzugsweise weist die Steuereinheit wenigstens Eingänge für die Schaltfunktionen Vorwärtsfahren, Rückwärtsfahren, Stellung des Fahrpedales und für das Signal eines Geschwindigkeitssensors auf.

Vorzugsweise ist die Steuereinheit so eingerichtet, daß die wenigstens eine Betriebsbremse die Parkbremse und die Blokkiereinrichtung automatisch, unabhängig vom Fahrer, durch die Steuereinheit betätigt werden, wenn der Geschwindigkeitssensor das Signal Null liefert und eine(r) oder mehrere der durch die Eingänge erfaßten Betriebszustände der Arbeitsmaschine und Fahrabsichten des Fahrers in die Auswertung der Steuereinheit einbezogen werden und die Betätigung der wenigstens einen Betriebsbremse der Parkbremse und der Blockiereinrichtung wieder aufgehoben wird, wenn eine(r) oder mehrere der durch die Eingänge neu erfaßten Betriebszustände und Fahrabsichten eine Freigabe bewirken.

In einer ersten bevorzugten Ausgestaltung ist vorgesehen, daß die Steuereinheit so eingerichtet ist, daß die wenigstens eine Betriebsbremse, die Parkbremse und die Blockiereinrichtung betätigt werden, wenn die Bedingungen:
- Fahrpedal :: aus
- Geschwindigkeitssensor:: Null
vorliegen. Liegt eine der vorgeschilderten Bedingungen nicht vor, wird die Blockierung der wenigstens einen Betriebsbremse, der Parkbremse und der Blockiereinrichtung für die Pendelachse nicht aktiviert.

Ist die Steuereinheit durch ein Auslöseelement aktivierbar, ist zusätzliche Bedingung, daß das Auslöseelement eingeschaltet ist.

Alternativ kann vorgesehen sein, daß die Steuereinheit so eingerichtet ist, daß die wenigstens eine Betriebsbremse, die Parkbremse und die Blockiereinrichtung betätigt werden, wenn die Bedingungen:
- Vorwärtsschalter :: aus
- Rückwärtsschalter :: aus
- Geschwindigkeitssensor:: Null
vorliegen.

Ferner ist vorteilhaft vorgesehen, daß die Steuereinrichtung zusätzlich einen Eingang für ein Betätigungssignal der Betriebsbremse aufweist, und daß die Steuereinheit so eingerichtet ist, daß die wenigstens eine Betriebsbremse, die Parkbremse und die Blockiereinrichtung betätigt werden, wenn die Bedingungen:
- Bremspedalschalter :: ein
- Geschwindigkeitssensor:: Null
vorliegen.

Besonders vorteilhaft ist weiterhin vorgesehen, daß die automatische Steuereinheit vom Fahrer durch ein Auslöseelement deaktivierbar ist. Wenn im Einzelfall vom Fahrer eine manuelle Betätigung gewünscht wird, läßt sich dann die automatische Steuereinheit einfach deaktivieren.

Für diesen Fall ist weiterhin vorteilhaft vorgesehen, daß die Steuereinheit zusätzlich Eingänge für Betätigungssignale für die Blockiereinrichtung der Pendelachse und für die Parkbremse aufweist, über die eine Aktivierung oder Freigabe der Blockiereinrichtung und/oder der Parkbremse erfolgen kann, wenn die automatische Steuereinheit vom Fahrer durch das Außenelement deaktviert ist. Der Fahrer kann dann manuell die Parkbremse sowie auch die Pendelachsblockierung einschalten. Bei aktivierter automatischer Steuereinheit sind diese Funktionen wirkungslos.

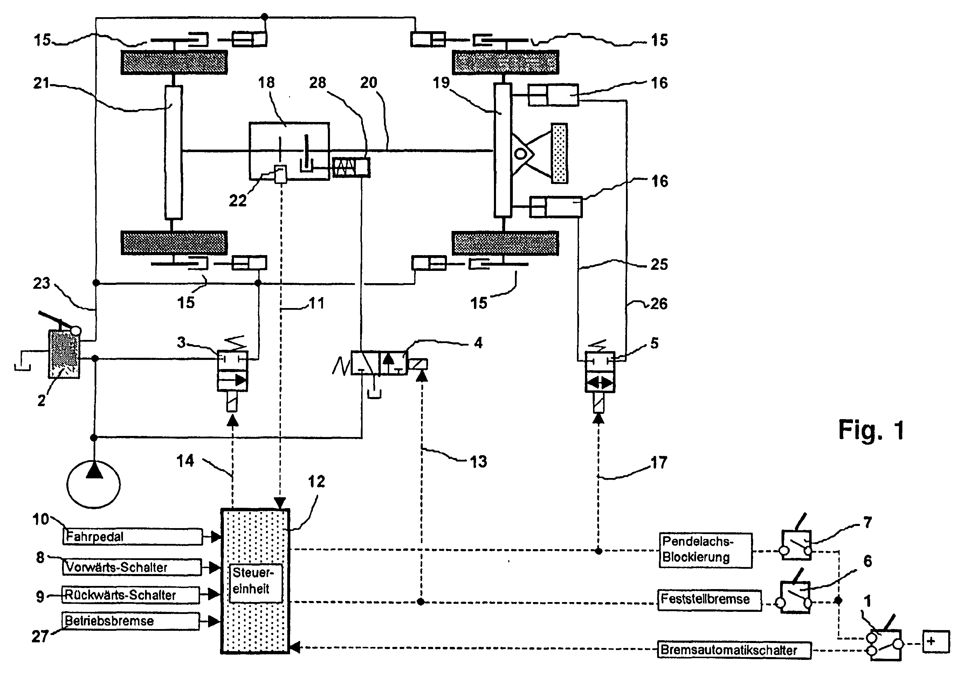

Die Erfindung ist nachstehend anhand der Zeichnung beispielsweise näher erläutert. Diese zeigt in
- Fig. 1: eine Prinzipdarstellung einer erfindungsgemäßen Bremseinrichtung und

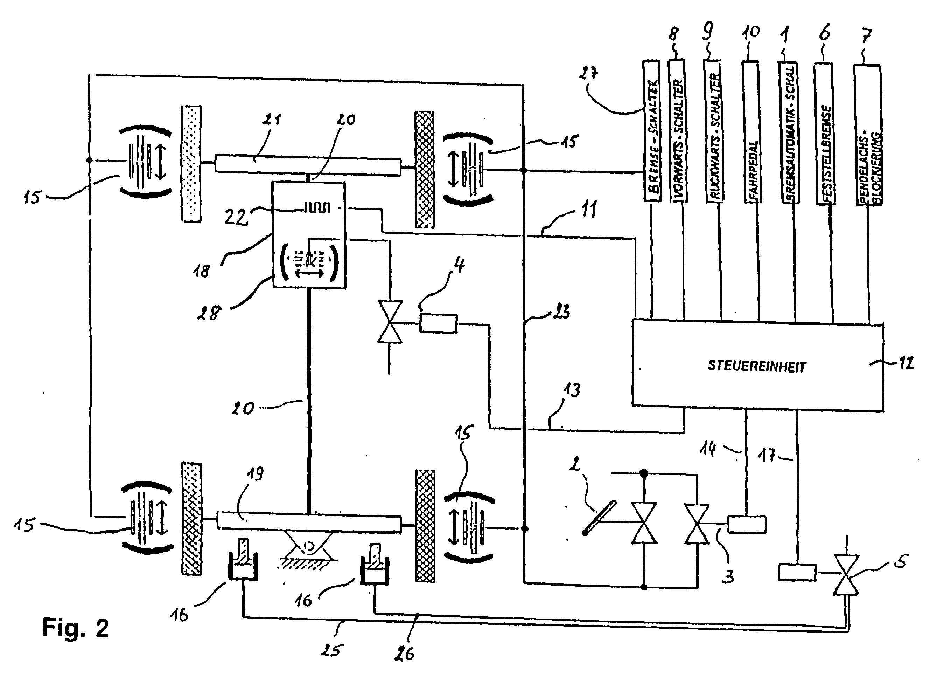

- Fig. 2: eine der Fig. 1 vergleichbare Darstellung der Bremseinrichtung.

Eine Arbeitsmaschine, beispielsweise ein Mobilbagger, ist mit ihrer Bremseinrichtung in den Figuren nur mit den erfindungswesentlichen Teilen dargestellt. So weist die Arbeitsmaschine ein Getriebe 18 auf, das mittels Gelenkwellen 20 mit Achsen 19, 21 verbunden ist, wobei die Achse 19 als Pendelachse ausgebildet ist. Beide Achsen 19, 21 sind beidendseitig jeweils mit einem Rad mit Radbremse 15 ausgerüstet, welche jeweils eine Betriebsbremse bilden.

Beispielsweise im Getriebe 18 ist eine Parkbremse 28 angeordnet und die Pendelachse 19, welche dazu dient, Unebenheiten der Fahrbahn beim Fahren auszugleichen, ist mit eine Blockiereinrichtung bildenden Blockierzylindern 16 verbunden, mit denen die Standfestigkeit der Pendelachse 19, insbesondere im Stillstand, erreicht werden kann.

Die Radbremsen 15 können von einem im Fahrerhaus angeordneten Pedalventil 2 über Leitungen 23 vom Fahrer betätigt werden. Die Parkbremse 28 kann ebenfalls vom Fahrer direkt betätigt werden, was durch das Bezugszeichen 6 angedeutet ist. Die Blockierzylinder 16 der Pendelachse 19 können ebenfalls vom Fahrer direkt betätigt werden (Bezugszeichen 7).

Erfindungsgemäß weist nun die Bremseinrichtung der Arbeitsmaschine eine Steuereinheit 12 auf. Diese automatische Steuereinheit 12 ist mit Eingängen für die Erfassung von Fahrzuständen der Arbeitsmaschine und Bediengrößen und mit Ausgängen zur gleichzeitigen Betätigung der Betriebsbremsen 15, der Parkbremse 28 und der Blockiereinrichtung 16 versehen.

Dazu ist die Steuereinheit 12 ausgangsseitig über eine Leitung 13 und ein Ventil 4 mit der Parkbremse 28 verbunden, während die Steuereinheit 12 über eine Leitung 14 und ein Schaltventil 3 und anschließend über die Leitung 23 mit den Betriebsbremsen 15 verbunden ist.

Darüber hinaus ist die Steuereinheit 12 ausgangsseitig über eine Leitung 17 und ein Schaltventil 5 mit den Leitungen 25 und 26 der Blockiereinrichtungen verbunden.

Die Steuereinheit 12 ist über ihre Ausgänge in der Lage, sämtliche Betriebsbremsen 15, die Parkbremse 28 und die Blockiereinrichtungen 16 gleichzeitig zu betätigen, um alle Bremsen und Blockiereinrichtungen automatisch festzusetzen.

Um diese Funktionen auszuführen, weist die Steuereinheit 12 zunächst einen Eingang 27 für ein Betätigungssignal der Betriebsbremsen 15 auf sowie einen Eingang für eine Leitung 11, die zu einem Geschwindigkeitssensor 22 führt, der innerhalb des Getriebes 18 angeordnet ist und aufgrund seiner getriebeseitigen Verbindung mit den Fahrzeugrädern Signale entsprechend der Fahrgeschwindigkeit der Arbeitsmaschine über die Leitung 11 an die Steuereinheit 12 meldet.

Als weitere Eingänge weist die Steuereinheit 12 einen Schalter 8 für Vorwärtsfahren, einen Schalter 9 für Rückwärtsfahren, einen Schalter 10 für die Stellung des Fahrpedales, einen Schalter 6 zur manuellen Betätigung der Parkbremse 28 und einen Schalter 7 zur manuellen Betätigung der Blockierung der Pendelachse 19 auf. Außerdem ist ggf. ein Auslöseelement 1 (Bremsautomatikschalter) vorgesehen, der eine Aktivierung der automatischen Steuereinheit 12 ermöglicht.

Durch diese Eingänge können der Steuereinheit 12 die jeweiligen Fahrabsichten des Fahrers mitgeteilt werden. Es wird die Bremsung des Fahrzeuges (Aktivierung der Bremsen 15 und 28) und die Blockierung der Pendelachse 19 bewirkt, sofern die in den Patentansprüchen näher definierten vorgegebenen Fahrbedingungen vorliegen. Ist die Bremseinrichtung mit einem Auslöseelement 1 versehen, läßt sich die automatische Steuereinheit 12 vom Fahrer durch Betätigung oder Nichtbetätigung des Auslöseelementes 1 aktivieren oder nicht aktivieren, so daß ein Betrieb mit und ohne Steuereinheit 12 möglich ist.

Mit den Schaltern 6, 7 der Parkbremse 28 sowie der Blockiereinrichtung 16 der Pendelachse 19 kann bei deaktiviertem Auslöseelement 1 manuell die Parkbremse 28 sowie die Pendelachsblockierung 16 separat eingeschaltet werden. Bei aktiviertem Auslöseelement 1 sind die Schalter 6, 7 funktionslos.

Ist die Steuereinheit 12 nicht aktiviert oder liegen die vorgegebenen Fahrbedingungen nicht vor, so können sämtliche Bremsen in herkömmlicher Weise vom Fahrer betätigt werden (Pedalventil 2 für die Betriebsbremsen 15, Schalter 6, 7 für die Parkbremse 28 und die Blockiereinrichtungen 16).

## Patentansprüche

1. Bremseinrichtung für eine Arbeitsmaschine, insbesondere für einen Mobilbagger mit Radantrieb, mit wenigstens einer direkt oder indirekt auf ein Rad wirkenden Betriebsbremse (15), einer Parkbremse (28) und einer Blockiereinrichtung (16) für eine Pendelachse (19) der Arbeitsmaschine, wobei die wenigstens eine Betriebsbremse (15), die Parkbremse (28) und die Blockiereinrichtung (16) mit einer Steuereinheit verbunden und durch diese betätigbar sind,
**dadurch gekennzeichnet,**
**daß** die automatische Steuereinheit (12) mit Eingängen (27,11) für die Erfassung von Betriebszuständen der Arbeitsmaschine und mit Eingängen (8,9,10) für die Erfassung von Fahrabsichten des Fahrers (Vorwärtsfahrt, Rückwärtsfahrt, Fahrpedalstellung) sowie mit Ausgängen zur gleichzeitigen Betätigung der wenigstens einen Betriebsbremse (15), der Parkbremse (28) und der Blockiereinrichtung (16) der Pendelachse (19) versehen ist, und daß die automatische Steuereinheit (12) so eingerichtet ist, daß die gleichzeitige Betätigung automatisch, unabhängig vom Fahrer durch die Steuereinheit (12) erfolgt, wenn durch die Steuereinheit (12) festgestellt wird, daß die durch die Eingänge (27,8,9,11,10) erfaßten und von der Steuereinheit (12) ausgewerteten Betriebszustände der Arbeitsmaschine und Fahrabsichten des Fahrers vorgebbare Bedingungen erfüllen.

2. Bremseinrichtung nach Anspruch 1,
**dadurch gekennzeichnet,**
**daß** die Steuereinheit (12) wenigstens Eingänge für die Schaltfunktionen Vorfährtsfahren (8), Rückwärtsfahren (9), Stellung des Fahrpedales (10) und für das Signal eines Geschwindigkeitssensors (22) aufweist.

3. Bremseinrichtung nach Anspruch 1 oder 2,
**dadurch gekennzeichnet,**
**daß** die Steuereinheit (12) so eingerichtet ist, daß die wenigstens eine Betriebsbremse (15), die Parkbremse (28) und die Blockiereinrichtung (16) automatisch, unabhängig vom Fahrer, durch die Steuereinheit (12) betätigt werden, wenn der Geschwindigkeitssensor (11) das Signal Null liefert und eine(r) oder mehrere der durch die Eingänge (8,9,10,27) erfaßten Betriebszustände der Arbeitsmaschine und Fahrabsichten des Fahrers; die in die Auswertung der Steuereinheit (12) einbezogen werden; den Stillstand der Arbeitsmaschine bestätigen, und die Betätigung der wenigstens einen Betriebsbremse (15), der Parkbremse (28) und der Blockiereinrichtung (16) wieder aufgehoben wird, wenn eine(r) oder mehrere der durch die Eingänge (8,9,10,27) neu erfaßten Betriebszustände und Fahrabsichten eine Freigabe bewirken.

4. Bremseinrichtung nach Anspruch 1, 2 oder 3,
**dadurch gekennzeichnet,**
**daß** die automatische Steuereinheit (12) vom Fahrer durch ein Auslöseelement (1) deaktivierbar ist.

5. Bremseinrichtung nach Anspruch 4,
**dadurch gekennzeichnet,**
**daß** die Steuereinheit (12) zusätzlich Eingänge (6,7) für Betätigungssignale für die Blockiereinrichtung (16) der Pendelachse (19) und für die Parkbremse (28) aufweist, über die eine Aktivierung oder Freigabe der Blockiereinrichtung (16) und/oder der Parkbremse (28) erfolgen kann, wenn die automatische Steuereinheit (12) vom Fahrer durch das Auslöseelement (1) deaktiviert ist.

## Claims

1. A braking arrangement for a working machine, in particular for a mobile excavator with wheel drive, comprising at least one operating brake (15) acting directly or indirectly on a wheel, a parking brake (28) and a blocking device (16) for a pivot axle (19) of the working machine, wherein the at least one operating brake (15), the parking brake (28) and the blocking device (16) are connected to a control unit and are actuable thereby,
**characterised in that**
the automatic control unit (12) is provided with inputs (27, 11) for the detection of operating states of the working machine and with inputs (8, 9, 10) for the detection of travel intentions of the driver (forward travel, reverse travel, travel control pedal position) and with outputs for the simultaneous actuation of the at least one operating brake (15), the parking brake (28) and the blocking device (16) of the pivot axle (19), and that the automatic control unit (12) is so adapted that simultaneous actuation is effected automatically independently of the driver by the control unit (12) if the control unit (12) establishes that the operating states of the working machine and travel intentions of the driver, which are detected by the inputs (27, 8, 9, 11, 10) and evaluated by the control unit (12), fulfil predeterminable conditions.

2. A braking arrangement according to claim 1 **characterised in that** the control unit (12) has at least inputs for the switching functions forward travel (8), reverse travel (9), position of the travel control pedal (10) and for the signal of a speed sensor (22).

3. A braking arrangement according to claim 1 or claim 2 **characterised in that** the control unit (12) is so designed that the at least one operating brake (15), the parking brake (28) and the blocking device (16) are actuated automatically independently of the driver by the control unit (12) if the speed sensor (11) supplies the signal zero and one or more of the operating states of the working machine and travel intentions of the driver, which are detected by the inputs (8, 9, 10, 27) and which are incorporated into evaluation of the control unit (12) confirm that the working machine is stationary and actuation of the at least one operating brake (15), the parking brake (28) and the blocking device (16) is cancelled again if one or more of the operating states and travel intentions freshly detected by the inputs (8, 9, 10, 27) cause release.

4. A braking arrangement according to claim 1, claim 2 or claim 3 **characterised in that** the automatic control unit (12) is deactivatable by the driver by a release element (1).

5. A braking arrangement according to claim 4 **characterised in that** the control unit (12) additionally has inputs (6, 7) for actuating signals for the blocking device (16) of the pivot axle (19) and for the parking brake (28), by way of which activation or release of the blocking device (16) and/or the parking brake (28) can be effected if the automatic control unit (12) is deactivated by the driver by the release element (1).

## Revendications

1. Dispositif de freinage pour une machine, en particulier pour une pelle mécanique mobile montée sur roues, avec au moins un frein de service (15) agissant directement ou indirectement sur une roue, un frein de stationnement (28) et un dispositif de blocage (16) d'un essieu oscillant (19) de la machine, le frein de service (15), au moins au nombre de un, le frein de stationnement (28) et le dispositif de blocage (16), étant reliés à une unité de commande et étant actionnable par celle-ci
**caractérisé en ce que**
l'unité de commande (12) automatique est dotée d'entrées (27, 11) pour la détection des états de fonctionnement de la machine, et d'entrées (8, 9, 10), pour la détection des intentions du conducteur (marche avant, marche arrière, position de la pédale d'accélérateur), de même que de sorties pour l'actionnement simultané dudit frein de service (15), au moins au nombre de un, du frein de stationnement (28) et du dispositif de blocage (16) de l'essieu oscillant (19),
et **en ce que** l'unité de commande (12) est réglée de telle sorte que l'actionnement simultané se produit automatiquement, au moyen de l'unité de commande (12), indépendamment du conducteur, quand il est constaté par l'unité de commande (12) que les états de fonctionnement de la machine, détectés par les entrées (27, 8, 9, 11, 10) et interprétés par l'unité de commande (12), et que les intentions du conducteurs satisfont des conditions prédéfinissable.

2. Dispositif de freinage selon la revendication 1, **caractérisé en ce que** l'unité de commande (12) présente au moins des entrées pour les fonctions logiques marche avant (8), marche arrière (9), position de la pédale d'accélérateur (10) et pour le signal d'un capteur de vitesse (22).

3. Dispositif de freinage selon la revendication 1 ou 2, **caractérisé en ce que** l'unité de commande (12) est réglée de telle sorte que le frein de service (15), au moins au nombre de un, le frein de stationnement (28) et le dispositif de blocage (16) sont actionnés automatiquement, indépendamment du conducteur, au moyen de l'unité de commande (12), quand le capteur de vitesse (11) fournit le signal nul et qu'un ou plusieurs des états de fonctionnement de la machine et des intentions du conducteur; qui sont pris en compte dans l'interprétation par l'unité de commande (12), confirment l'arrêt de la machine,
et **en ce que** l'actionnement du frein de service (15), au moins au nombre de un, du frein de stationnement (28) et du dispositif de blocage (16) cesse, lorsqu'un ou plusieurs états de fonctionnement et intentions du conducteur, nouvellement détectés par les entrées (8, 9, 10, 27), induisent un déblocage.

4. Dispositif de freinage selon la revendication 1, 2, ou 3 **caractérisé en ce que** l'unité de commande automatique (12) est désactivable au moyen d'un élément de libération (1).

5. Dispositif de freinage selon la revendication 4 **caractérisé en ce que** l'unité de commande automatique (12) présente des entrées supplémentaires (6,7) pour des signaux d'actionnement du dispositif de blocage (16) de l'essieu oscillant (19) et pour le frein de stationnent (28), au moyen desquelles, une activation ou un déblocage du dispositif de blocage (16) et/ou du frein de stationnement (28) peut avoir lieu, quand l'unité de commande (12) est désactivée par le conducteur au moyen de l'élément de libération (1).
